(19) Europäisches Patentamt / European Patent Office / Office européen des brevets

(11) **EP 4 636 651 A2**

(12) **EUROPEAN PATENT APPLICATION**

(43) Date of publication:
**22.10.2025   Bulletin 2025/43**

(21) Application number: **25170740.2**

(22) Date of filing: **15.04.2025**

(51) International Patent Classification (IPC):
**G06N 3/0475** (2023.01)   **G06N 20/00** (2019.01)

(52) Cooperative Patent Classification (CPC):
**G06N 3/0475; G06N 20/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **15.04.2024   US 202463634144 P**

(71) Applicant: **GOOGLE LLC
Mountain View CA 94043 (US)**

(72) Inventor: **Kleijn, Willem Bastiaan
Sydney, NSW 2009 (AU)**

(74) Representative: **Marks & Clerk GST
1 New York Street
Manchester M1 4HD (GB)**

(54) **SYSTEM FOR MODELING VECTOR SEQUENCES AS PROBABILITY FLOWS**

(57)   Disclosed implementations for providing a definition of probability flow between probability distributions. In an example implementation, a prompt is received from a computing device. A generative model of a vector process is conditioned based on the prompt, the generative model defined by a plurality of probability distributions of the vector process and employing a definition of a velocity field over a time interval. A vector sequence is generated with the generative model, wherein the vector sequence is an instantiation of the vector process.

200

```
┌─────────────────────────────┐
│       Receive Prompt        │
│            202              │
└─────────────────────────────┘
              │
              ▼
┌─────────────────────────────┐
│ Condition a Generative      │
│ Model of a Vector Process   │
│            204              │
└─────────────────────────────┘
              │
              ▼
┌─────────────────────────────┐
│   Generate Vector Sequence  │
│            206              │
└─────────────────────────────┘
```

**FIG. 2**

EP 4 636 651 A2

**Description**

**BACKGROUND**

Generative models in general have advanced significantly in the last decade. Recent model-generated images and model-generated speech are commonly indistinguishable from ground truth signals. A range of methods has been used, including variational autoencoders (VAEs), generative adversarial networks (GANs), normalizing flows, and diffusion-based approaches. A large proportion of recent work uses diffusion-based methods as it combines high quality generation with predictable training behavior. As a result, current state-of-the-art video generation methods are generally based on diffusion.

**SUMMARY**

Implementations of the present disclosure are generally directed to systems and methods providing a definition of probability flow between probability distributions. This definition of the probability flow is based on a continuity equation and can be used to define a generative model for a realization of a vector process $\{x_i\}$. Put another way, generative models that are defined according to implementations of the described system may be employed to model a vector process and generate vector sequences.

A vector process is a set of (random) variables organized in vectors, $x_i$, with time label $i$, where each random vector is composed of a fixed number of (random) variables. The time labels $i$ can make up a countable set, which can be finite or infinite. Thus, a vector process is described by the joint distribution of the vectors (and of their vector elements) making up the sequence.

A realization or sample of a vector process is a vector sequence where the vectors have specific numerical values. Put another way, a vector sequence is a sequence of numerical vectors (e.g., the sequence of images in a specific video). Vector processes, which include a number of vector sequences, can be used to characterize, for example, video, audio spectra, motion capture, weather patterns, and the like. In some cases, a probability-flow ordinary differential equation (ODE) or a stochastic differential equation (SDE) that solves the continuity equation and boundary conditions of the continuity equation can be employed to map samples of a first distribution $p_0$ into samples of a second distribution $p_1$. In some cases, the continuity equation employs the definition of a velocity field $v(x, t)$ over a time interval $t = [0,1]$. A velocity field describes fluid movement within a specific region or over a surface.

Generally, methods to learn a velocity field can be formulated based on stochastic interpolants. As subsequent vectors of a stationary vector process have identical marginal probability distributions, the case $p_0 = p_1$ is considered. The ODE or SDE that uses the learned velocity field then describes the relation between subsequent samples of the stationary sequence, thus capturing the dynamic behavior in addition to the marginal distribution. The ODE or SDE formulation describes a first-order Markov chain of vectors, but with data rearrangement can describe Markov chains of arbitrary order. As the probability flow does not change for subsequent intervals, the described system can be interpreted as the description of a steady-state continuous probability flow with a churn (swirl) that characterizes the dynamics of, for example, video signals.

Moreover, the ODE and SDE describe the evolution of individual elements within the probability flow. Various enhancements can be made. For example, the velocity field can be enhanced with cross-attention based conditioning. The described system can be used as a baseline low-resolution video in a system equipped with super-resolution to enhance quality. The described system can be used to generate audio signals, where the signal is advantageously represented as a vector sequence, with linear or nonlinear pre- and post-processing. The described system can be used for encoding a vector sequence by transmitting suitable conditioning features.

Thus there is described a method, implemented by one or more computers in one or more locations, involving receiving a prompt from a computing device. In general, the prompt characterizes a content of the generated vector sequence. The prompt may comprise text or an image or audio data.

A generative model of a vector process is conditioned on the prompt. The generative model, e.g. a neural network model defined by a plurality of probability distributions of the vector process, processes the prompt to generate a vector sequence, i.e. a sequence of vectors with content characterized by the prompt. The vector sequence can be an instantiation of the vector process. The generative model (and vector sequence generation) can employ a definition of a velocity field over a time interval.

In some implementations, the generative model comprises a diffusion model that processes a noisy version of the vector sequence, conditioned on the prompt, to generate a reduced noise version of the vector sequence. In this way the vector sequence can be generated iteratively, over a succession of noise reduction steps, e.g. starting from an initial version of the vector sequence that can be sampled from a noise distribution (i.e. the initial vector sequence can be random). The denoising process operates over a time interval (which may correspond to a sequence of de-noising steps). For example the succession of noise reduction steps can be characterized as a reverse diffusion process over a time interval, e.g. [0,1]. The phrase "boundary conditions" can be used to refer to a condition that the process starts with the initial, noisy vector sequence and ends at a final, de-noised vector sequence.

In some implementations, the denoising process is characterized by the velocity field. More particularly each version of the vector sequence can be characterized by a respective probability distribution, and the velocity field can define how the probability distribution at one time (or time step) changes to the probability distribution at a subsequent time (or time step) in the denoising process.

The generated vector sequence can define pixels of one or more image frames, i.e. pixel values of a still or moving image, e.g. an image described by the prompt. In another example, generated vector sequence can define values of an audio waveform (in the time or frequency domain), e.g. audio representing a spoken version of text of the prompt (text-to-speech).

In some cases, the generative model is a diffusion model neural network with any architecture that is suitable for processing an input vector sequence to generate a corresponding output vector sequence (i.e. with output elements corresponding to input elements of the input vector sequence). For example, the generative model may comprise a U-Net or a transformer neural network (characterized in comprising a succession of attention neural network layers).

It is appreciated that methods in accordance with the present disclosure can include any combination of the aspects and features described herein. That is, methods in accordance with the present disclosure are not limited to the combinations of aspects and features specifically described herein but also may include any combination of the aspects and features provided.

The details of one or more implementations of the present disclosure are set forth in the accompanying drawings and the description below. Other features and advantages of the present disclosure will be apparent from the description and drawings, and from the claims.

## BRIEF DESCRIPTION OF THE DRAWINGS

The following detailed description that sets forth aspects of the subject matter, along with the accompanying drawings of which:

FIG. 1 depicts an example environment that can be employed to execute implementations of the present disclosure;
FIG. 2 depicts a flowchart of a non-limiting process that can be performed by implementations of the present disclosure; and
FIG. 3 depicts an example system that includes a computer or computing device that can be programmed or otherwise configured to implement systems or methods of the present disclosure.

## DETAILED DESCRIPTION

In some implementations, the described modeling system can be employed to find a meaningful map between two probability distributions of variables with identical dimensionality. More precisely, the system can be employed to define a flow from one probability distribution $p_0$ to another distribution $p_1$ over a time interval. In some examples, the time interval may be selected as [0, 1]. Accordingly, the flow defines the distributions $p_t$ with $t \in [0, 1]$. In some cases, the flow is described by means of an ODE or SDE that determines the movement of an individual sample from a first probability distribution to a sample of a second distribution.

Diffusion based generative methods are a special case of the mapping of one distribution into another, where one of the two distributions is a normal distribution. Diffusion-based generative methods generally attempt to find an inverse of the flow associated with gradually adding Gaussian noise to an input vector (image), the specification of a map between two arbitrary distributions must rely on a more general formalism. Typically, that is the continuity equation, see EQ (1).

Moreover, the described modeling system is based on a description of the movement of particles (e.g., dust particles) in a viscous fluid. The spatial coordinates of the particles correspond to the vector elements in a vector sequence. Consider a set of $N$ dust particles in a pipe of constant cross section area that flow along at constant speed along the pipe. The dimensions along the length of the pipe can be defined as time $t$, which is a scalar. In some cases, the particles all start at time $t=0$ and flow along at the same speed. The dimensions in the cross-section of the pipe can be defined as the spatial dimensions. Accordingly, the spatial dimensionality is three for a physical space but typically much larger for a machine-learning model. The model characterizes the movement of the particles in the spatial dimensions, while the particles flow along in time.

As the number of particles $N$ is large, the particle locations can be characterized in terms of a density. A probability distribution $p(x,t)$ can be employed, which is the density normalized to integrate to 1 over the pipe cross-section. In some examples, as there are $N$ particles, particles cannot appear or disappear. The same is true, in some examples, for the probability (i.e., the probability integrates to 1 at all time ($\int dxp(x, t) = 1$)). However, the local probability can change as the particles are flowing along the pipe. To state this another way, the probability has to satisfy the transport equation, for an infinitesimal spatial volume centered at spatial location $x$, the increase in probability over a time interval equals the net inflow of probability into that volume over that time interval. Mathematically the concept can be defined according to a continuity equation:

$$\frac{\partial p(x,t)}{\partial t} + \nabla_x \cdot J = 0, \qquad (1)$$

where $J$ is the probability current (or flux) and $\nabla_x \cdot$ is the divergence operator.

Since movement of the particles is stochastic, the probability current is of a nontrivial form. As the viscous fluid counters any motion, the displacement of the particle over a small-time interval $\delta t$ is assumed proportional to a force acting on the particle, which implies ignoring the inertial component in the underlying equation of motion. In some cases, the total displacement of a particle is the sum of a deterministic "drift" component (displacement due to a force field operating on the particle), and a random "diffusion" component (displacement due to random forces resulting from collisions of our dust particle with the small particles making up the fluid). In some cases, the drift contribution to the flux is proportional to the density and is $b(x,t)p(x,t)$, where $b(x, t)$ is a velocity vector (when considered over a range of $x$ and $t$, $b(x, t)$ is a velocity field). Generally, a flux magnitude increasing in the direction of the velocity vector will remove particles from the infinitesimal volume. In some cases, the diffusion component cannot favor a particular direction and hence cannot depend on the gradient of the distribution of the dust particles. Hence, in some cases, the diffusion component is proportional to the Laplacian ($-\nabla_x \cdot \nabla_x$) of the probability distribution (as diffusion results in a flat distribution, a convex $p(x, t)$ will increase $p(x,t)$). As the Laplacian is the divergence of the gradient, this implies that the corresponding component of the probability current is proportional to the gradient of the probability distribution: $-D(t)\nabla_x p(x, t)$, where D(t) is a scalar diffusion coefficient. Hence:

$$J = b(x,t)p(x,t) - D(t)\nabla_x p(x,t) \qquad (2)$$

When J is of the form equation (2), then the continuity equation can be interpreted as the Fokker-Planck equation:

$$\frac{\partial p(x,t)}{\partial t} + \nabla_x \cdot \big(b(x,t)p(x,t)\big) - D(t)\nabla_x \cdot \nabla_x p(x,t) = 0 \qquad (3)$$

In practice the Fokker-Planck equation (that is, its coefficients) can be specified using only empirical data. Interesting from that perspective is the *score function* $s(x,t) = \nabla_x \log p(x,t) = \frac{1}{px(x,t)}\nabla_x p(x,t)$. In contrast to $p(x, t)$, the score function $s(x,t)$ can often be estimated from empirical data. Assuming a known $s(x,t)$ and using the score function as a known entity, the Fokker-Planck equation can be written as the continuity equation:

$$\frac{\partial p(x,t)}{\partial t} + \nabla_x \cdot \big(v(x,t)p(x,t)\big) = 0 \qquad (4)$$

with velocity $v(x,t) = b(x, t) - D(t)s(x, t)$.

Returning to the reasoning that led to equation (2) and to probability current $v(x,t)p(x, t)$ in equation (4), the differential equations for the coordinates of the individual particles can be defined. For the latter case, the *probability flow* ODE (ordinary differential equation) can be defined according to:

$$dx = v(x,t)dt \qquad (5)$$

A more complex reasoning for equation (2) based on stochastic calculus that separates the fore-mentioned drift contribution, characterized by $b(x,t)$, and the random diffusion component, characterized by $D(t)$, results in the SDE (stochastic differential equation), which can be defined according to:

$$dx = b(x,t)dt + \sqrt{2D(t)}dw_t, \qquad (6)$$

where $dw_t$ is the Wiener process. Both equations (5) and (6) can be simulated.

In some implementations, the equations (5) and (6) provide models for the time evolution of particles (or a vector).

For a vector sequence, a model for the evolution of the vector from a time $t_o$ to a time $t_1$ can be defined; however, $b(x, t)$ and $D(t)$ have not been specified and, in some cases, must be learned based on reasonable assumptions.

Diffusion

In the following description, "image" is used to describe a generated vector in a generated vector sequence for the sake of clarity. However, the described system applies to vector sequences in general. For example, the vectors can be short-term spectra for speech and audio, or angles and/or coordinates for the generation of an animated stick figure, coordinates of bird flocks, etc. Also, the notation does not differentiate between random variables and their realization.

As used herein, a random variable includes a function mapping sample space entries to numbers. An example of the sample space may include {rainy, sunshine, cloudy, other} and the random variable is the map of this space, for example, {2, 4, 9, 9} (note these random variables need not be unique). Moreover, the same sample space can have different random variables (e.g., the random variables {2, 3, 4, 5} can also map {rainy, sunshine, cloudy, other}). A sample space itself is often numerical (e.g., pixel values) and can be multi-dimensional. As an example, according to the above rules, random variables can be defined for each individual pixel in the sample space having all possible pixel value combinations in an image. In such an example, each value the (i.e., output of the) random variable can take is associated with a probability (and conditional probabilities), which can be written as $P(X = 3) = 0.2$, where $X$ is the random variable.

Diffusion based methods exploit that a forward process that takes a distribution of clean images to a distribution of noise images by gradual noise addition to the individual clean images over some time interval is reversible in a probabilistic sense (in this scenario the time variable increases monotonically with noise variance). The forward process leads towards a noise image. In some implementations, the process is considered as a continuous-time process. For individual images, the forward process is then described by a first SDE that is specified by its drift coefficient (a vector) and its diffusion coefficient (a scalar). The corresponding backward process is then described by a second SDE with coefficients that can be obtained from those of the forward-process SDE and the score function. Thus, when the specification of a forward SDE equation and the score function from observing examples of a known forward process (the gradual noise addition) can be defined, a generative modeling with the backward-process SDE can be performed by initializing the backward process with a pure-noise image. While there is a one-to-one correspondence between forward and backward SDEs, a back-to-back solution of the forward and backward SDEs results in a new sample from the distribution of images underlying the training database.

While applied to individual images, the forward and backward process each correspond to an evolution of a probability distribution of the images. For example, in the forward process the probability distribution may evolve from a data distribution $p_{t=0} = p_{data}$, such as a distribution of images of bedrooms, to a multivariate normal distribution $p_{t=\infty} = \mathcal{N}(0, I)$. The evolution of the probability distribution is described by the Fokker-Planck equation (discussed above). As noted, the same probability flow also corresponds to an ODE, the probability-flow ODE for the individual images. Like the backward SDE, the (backward and forward) ODE specification requires the score function. The ODE formulation is convenient for several reasons: i) the forward and backward ordinary differential equations differ by a minus sign only, ii) the mapping for the individual images is deterministic, iii) the image flow direction at each point $[x,t]$ (each image and time pair) can be described with a deterministic velocity field in the image-and-time space. Importantly, the deterministic nature of the ODE implies that subsequent forward and then backward mapping returns the original image. In some cases, the probability-flow ODEs can be interpreted as a continuous normalizing flow.

The introduction of a forward map towards noise is primarily motivated by the ease of constructing such a forward process, which in turn facilitates learning of the score function (there is no drift term, $b(x, t) = 0$ for this simple forward process), which implies the backward process is known. Let $x_0$ represent an original image and $x_t$ the corresponding noisy signal at evolved time t. The training procedure involves the learning of the parameters θ of a neural network $F_\theta(x, t)$ that models only the score function. The neural network $F_\theta(x, t)$ is usually based on a so-called U-net or a transformer. The diffusion coefficient $D(t)$ is set by the system designer. The traditional training approaches are either based on finding a lower bound on a maximum likelihood expression (evidence lower bound or ELBO) or based on a score matching approach. Except for some scaling $\beta(t)$, in some cases, the score is equal to an optimal denoiser of the current noisy image $x$, minus that noisy image: $s(x,t) = \beta(t)(\mathbb{E}[x_o|x_t = x] - x)$. Thus, the network $F_\theta(x, t)$ can be trained to be an approximate denoiser. Although based on different reasoning, the lower bound (ELBO) based method leads to essentially the same procedure for determining the drift coefficient of the backward process SDE. In practice a range of methods with different details are used for the diffusion based generative models.

Conditioning - Generating Vector Sequences

While most work on generative methods relates to image generation, the generation of vector sequences and in particular video generation has seen significant attention. Much of the early work on generating vector sequences was based on autoregressive structures. Some examples are based on RNNs developed for language models, while others use a multi-scale autoregressive architecture, to avoid the blurriness associated with learned prediction based on a squared-error objective function. Examples may also be based on recurrently generating pixels based on previously generated pixels within the image and previous images, extending the pixelRNN algorithm, an approach that samples pixels from a probability distribution that is conditioned on previously generated pixels only. An early relevant work based on diffusion is the TimeGrad algorithm, which, while aimed at probabilistic time forecasting, can also be used for generating vector processes. This approach uses a traditional recurrent neural network (RNN) as conditioning for a diffusion-based generation of the current vector (i.e., the vector corresponding to a particular time or $x_t$).

Recent diffusion-based generative video models tend to model fixed-length image sequence blocks, usually based on text conditioning. Using suitable masking, the resulting methods may also be used in an autoregressive setup. Whereas in image generation an $N \times M$ pixel image is generated, the video approaches generate $N \times M \times L$ pixels contained in a sequence of L images all at once. In general, the methods factorize spatial and temporal operations and often start the diffusion process with the generation of a low spatial and temporal resolution video process. Spatial super resolution (increased resolution) can be achieved by using an upsampled low-resolution image as conditioning for a diffusion based generative process for a particular resolution (in addition to any other conditioning). Thus, the U-net is now of the form $F_\theta(x, t|\bar{x})$ where $\bar{x}$ is the upsampled low-resolution image. By cascading such super-resolution generative processes, a high-resolution image is obtained.

Other examples include video generation methods that use a frozen text encoder as input to a baseline video generation at very low spatial and temporal resolution. Resolution increases the result through a cascade of spatial and temporal super-resolution operations. The U-net contains separate layers to perform spatial and temporal processing. Still other example methods are based on diffusion-based image generation methods that are not retrained. In such examples a latent-diffusion model (LDM) diffusion-based image generation method is used for this purpose. The examples may interleave the spatial attention layers of the LDM U-net, which operates on individual frames (images), with temporal attention layers that operate on the entire temporal sequence. In some cases, the sequences are upsampled, which is aimed at short sequences, and use standard self-attention to provide temporal consistency within the U-net representations between subsequent frames.

Mapping Between Distributions

In one example, let $p(x, t)$ be the probability distribution of a real-valued (may be extended to complex random variables) random vector x at time t and let $v(t,x)$ be the velocity field. The continuity equation states that, for an infinitesimal hypercube, the sum of the time derivative of the probability distribution and the divergence of the probability flux must be zero (the increase of probability and the net in-flow of probability must sum to zero). As the probability flux is the velocity field multiplied by the probability distribution, the continuity equation can be defined according to:

$$\partial_t p(t, x) + \nabla \cdot \big( v(t, x) p(t, x) \big) = 0 \qquad (7)$$

In some cases, for the described mapping problem, the velocity field v(t, x) is defined such that the boundary conditions $p(0, x) = p_0(x)$ and $p(1,x) = p_1(x)$ hold. That is, a velocity field can be defined that leads to satisfaction of these conditions.

In some cases, the continuity equation is associated with a probability-flow ODE, that describes the time-dependent location y(t) of individual particles (images, or vectors) such that their density satisfies equation (7). In some cases, the probability-flow ODE can be defined according to:

$$dy = v(t, y)dt, \ y(0) = x_0 \qquad (8)$$

The ODE maps any set of particles drawn from $p_0$ into a set of particles drawn from $p_1$. While perhaps intuitive, a formal derivation of the probability-flow ODE is nontrivial. As will be discussed below, SDEs may also be defined for the particles that are consistent with the continuity equation (7).

If a velocity field $v(t,x)$ is consistent with the continuity equation and its boundary conditions, then, in some cases, the probability flow ODE is used to perform a mapping from realizations of the $RV x_0 \sim p_o$ into realizations of the $RV x_1 \sim p_1$. The maps will generally be used to describe two related distributions. For example, a map between landscapes with and without snow, or a map of persons with casual clothing to the same persons with formal clothing. More relevant to the current application, the map may be between subsequent vectors in vector sequence (for example a video signal) as will be discussed in more detail below. Three different methods for creating maps are described below.

Deterministic Map Based on Independent Observations

One example case for finding a map includes constructing a deterministic map based on independent sampling from $p_0$ and $p_1$. Although the sampling is independent, an invertible function $\phi : x_0 \mapsto x_1$ can be defined. Accordingly, the interpolant may be defined according to:

$$I_t(t, x_0, x_1) = \alpha(t)x_o + \beta(t)x_1, \, t \in [0, 1], \; \alpha(0) = \beta(1) = 1, \; \alpha(1) = \beta(0) = 0 \qquad (9)$$

Generally, the interpolant $I_t$ is a function where time and the (random) variables $x_o$ and $x_i$ are inputs, $\alpha$ and $\beta$ are any time (t) dependent functions that change monotonically between 0 and 1 according to a defined interpolation schedule (which can be freely chosen) and the random vector $x_t = I_t(t, x_0, x_1)$ at time $t \in [0, 1]$ is the output. The distribution $p_t$ of $x_t$ depends on $p_0$, $p_1$ and $t$. The interpolant is generally chosen so that the resulting ODE (or SDE) can be solved in relatively few steps of a numerical solver over the interval [0, 1].

In some cases, the temporal derivative of the interpolant is a velocity defined according to:

$$u(t, x_0, x_1) = \dot{\alpha}(t)x_o + \dot{\beta}(t)x_1, \qquad (10)$$

with $\dot{\alpha}(t) = \partial_t \alpha(t)$ and $\dot{\beta}(t) = \partial_t \beta(t)$. The vector $u(t, x_0, x_1)$ can be interpreted as a velocity at $x_t = I_t(t, x_0, x_1)$ for a given $x_o, x_1$, and time $t$ As $x_o$ and $x_1$ are random vectors, so is the output velocity $u(t, x_0, x_1)$ for a given $x_t$.

As noted, $x_0$ and $x_1$ are independent and may be assumed to try to construct a deterministic and invertible map from $x_0$ to $x_1$. To this purpose, a deterministic function $v(t, x_t)$ may be found that approximates the average of the velocities $u$ $(t, x_0, x_1)$ for all pairs $x_0, x_1$ for which $x_t = I_t(t, x_0, x_1)$. Accordingly, a deterministic function $v_\theta(t, x)$ may be defined with parameters $\theta$ that is constrained to be smooth in $t$ and $x$. In some cases, a set of parameters $\theta$ for $v_\theta$ can be obtained by minimizing the loss function defined according to:

$$L(\theta) = \mathbb{E}_{t \sim \mathcal{U}(0,1), x_0 \sim p_o, x_1 \sim p_1}[\|v_\theta(t, x_t) - u(t, x_0, x_1)\|_2^2]$$
$$x_t = I_t(t, x_0, x_1) \qquad (11)$$

where $\mathcal{U}(0,1)$ is the uniform distribution on [0, 1]. The expectation over $p_o$ and $p_1$ can be provided by databases. In some examples, the velocity field resulting from (11) is consistent with the continuity (transport) equation and the boundary conditions of the continuity equation.

In some cases, the velocity field $v_\theta(t, x_t)$, once known, defines a probability flow ODE as in equation (8). The ODE can be solved numerically to obtain $x_1$ from $x_o$, and the solution with numerical solvers generally requires fewer steps if $v_\theta$ $(t, x_t)$ is smoother in time and space.

In some cases, the optimization procedure can be repeated to obtain a velocity field $v(t, x)$ that is more favorable to ODE solvers. In some cases, a one-to-one ODE-based mapping obtained from optimizing (11) can be employed to find an $x_1$ associated with a sample $x_0 \sim p_o$. The dependent $x_1$ can be obtained by solving the ODE $dx = v_\theta(t, x)dt$ with the velocity field $v_\theta$ obtained from (11). The second optimization may be defined according to:

$$L(\theta) = \mathbb{E}_{t \sim \mathcal{U}(0,1), x_0 \sim p_o, x_1 \sim p_1}\left[\left\|v_{\theta^{(1)}}(t, x_t) - u(t, x_0, x_1)\right\|_2^2\right]$$
$$x_t = I_t(t, x_0, x_1) \qquad (12)$$

where only the dependent sampling of $x_1$ differs from (11). Note that, in general, $v_\theta$ is not equivalent to the time derivative of the interpolant (10) and that the second optimization leads to a behavior of the velocity field $v_{\theta(1)}$ that matches the behavior of the interpolant derivative more closely than the first optimization. Selecting the interpolants to be linear has empirically been shown to lead to velocity fields that approximate straight lines from $p_o$ to $p_1$, facilitating the performance of numerical ODE solvers. However, repeating the optimization procedure with objective (12) multiple times has been found to degrade performance.

This method, based on independent observations, assumes the joint distribution of the two random variables factorizes into independent distributions. The advantages of the approach include enabling the use of separate databases for $x_0$ and $x_1$. However, the method ignores dependencies that generally exist.

Deterministic Map Based on Joint Observations

The reasoning above can be extended to the case where paired observations $\{x_0, x_1\}$ drawn from the joint distribution $p_{01}(x_0, x_1)$ are available. Vector sequences form a case where the paired observations are available. The loss function for this case can be defined according to:

$$L(\theta) = \mathbb{E}_{t \sim \mathcal{U}(0,1),(x_0, x_1) \sim p_{o1}}[\|v_\theta(t, x_t) - u(t, x_0, x_1)\|_2^2]$$

$$x_t = I_t(t, x_0, x_1) \qquad (13)$$

In some cases, equation (13) defines a deterministic map (flow) between $x_0 \in p_0$ and $x_1 \in p_1$ based on observations of samples drawn from their joint distribution. As before, at inference the mapping consists of solving the ODE $dy = v_\theta(t, y)dt$ over the interval $t \in [0,1]$.

Stochastic and Deterministic Maps Based on Joint Observations

In some cases, a more general approach to mapping between variables of a joint distribution based on samples of the joint distribution can be employed. The method is closer in spirit to the original score function-based diffusion approaches. A generalized interpolant with a stochastic term can be defined according to:

$$I_t(t, x_0, x_1) = \alpha(t)x_o + \beta(t)x_1 + \gamma(t)z$$

$$\alpha(0) = \beta(1) = 1, \alpha(1) = \beta(0) = 0, \gamma(0) = \gamma(1) = 0$$

$$t[0,1], \qquad (14)$$

where $\in \mathcal{N}(0, 1)$ is a normal distributed scalar. The selection of a particular function $\gamma$ means the strength of the noise contribution at any time $t$ is designed by the user. A more conventional noise-based diffusion scenario can be obtained by selecting $\beta(t) = 0$ and $\gamma(1) > 0$.

In contrast to the methods described above, here a velocity corresponding to the interpolant does not need to be defined. Instead, similarly to the score-function based estimation for standard diffusion methods, the optimal L2 estimates of $x_o$, $x_1$, and $z$ given that $x_t$ takes a particular value $x$ are $\mathbb{E}[x_o|x_t = x], \mathbb{E}[x_1|x_t = x], \mathbb{E}[z|x_t = x]$, respectively. At time $t$, the space location is $x_t = I_t(t, x_0, x_1)$. The method approximates the optimal estimates of $x_o$ and $x_1$ with functions can be denoted by $g_0(t, x_t)$, $g_1(t, x_t)$, $g_2(t, x_t)$, with parameters $\theta_0$, $\theta_1$, $\theta_z$, respectively. The functions can be estimated according to:

$$L(\theta) = \mathbb{E}_{t \sim \mathcal{U}(0,1),x_0 \sim p_o,x_1 \sim p_1}[\|g_0(t, x_t) - x_0\|^2] \qquad (15)$$

$$L(\theta) = \mathbb{E}_{t \sim \mathcal{U}(0,1),x_0 \sim p_o,x_1 \sim p_1}[\|g_1(t, x_t) - x_1\|^2] \qquad (16)$$

$$L(\theta) = \mathbb{E}_{t \sim \mathcal{U}(0,1),x_0 \sim p_o,x_1 \sim p_1}[\|g_z(t, x_t) - z\|^2] \qquad (17)$$

In practice $g_0$, $g_1$, $g_z$ are neural networks. From the interpolant definition and $\mathbb{E}[x_t|x_t = x]$ it follows that:

$$x_t = \alpha(t)g_o(t, x_t) + \beta(t)g_1(t, x_t) + \gamma(t)g_z(t, x_t) \qquad (18)$$

and that, hence, two neural networks can be used rather than three.

Knowing only $t$ and $x_t$ a deterministic velocity field can be defined at $t$ and $x_t$ as the expectation of the interpolant of the time derivative of the interpolant:

$$v(t, x_t) = \dot{\alpha}g_o(t, x_t) + \dot{\beta}g_1(t, x_t) + \dot{\gamma}g_z(t, x_t) \qquad (19)$$

The objective functions (15), (16) and (17) encourage the velocity field to be consistent with the boundary conditions of the continuity (transport) equation, $p(0, x) = p_0$ and $p(1, x) = p_1$. Thus, the probability-flow ODE formulation may be defined according to:

$$dy = v(t, y)dt, \qquad\qquad (20)$$

which can be used to map individual samples $y(0) = x_0$ drawn from $p_0$ into a suitable $y(1) = x_1$ drawn from $p_1$.

Generally, the SDE formulation is less straightforward than the ODE formulation. In some cases, the SDE is defined according to:

$$dx = \big(v(t, x) - D(t)\gamma^{-1}(t)g_z(t, x)\big)dt + \sqrt{2D(t)}dw_t \qquad\qquad (21)$$

where $D(t)$ is a user-selected diffusion coefficient and $dw_t$ is the Wiener process. Note that the Wiener process satisfies $w_{t+b} - w_t \sim \mathcal{N}(0, b)$, so in a numerical SDE solution the variance of the finite step approximation for $dw_t$ is known and proportional to the step size in time.

In some cases, only $v(t, x_t)$, the ODE, and additional $g_z$ for the SDE are defined, the entity $g_v(t, x_t) = \dot{\alpha}g_o(t, x_t) + \dot{\beta}g_1(t, x_t)$ is assigned a neural network and $g_o$ and $g_1$ not used. For the choice $\gamma(t) = 0$, in some cases, the method is then reduced to that of the description above regarding equation (13).

In some cases, the neural networks $g_o$ and $g_1$ are formulated as approximations to optimal estimators of $x_o$ and $x_1$. In the context of diffusion, subtracting the current value $x_t$ for the purpose of optimizing the neural network may lead to better performance. This may be the case here as well, particularly if for observation pairs $(x_1, x_0)$ the samples $x_1$ and $x_0$ are similar. In some cases, this will generally be the case for vector sequences.

Vector Sequences as Probability Flows

In some cases, the described system employs stochastic interpolants to map between two distributions. These stochastic interpolants can be used to model discrete-time temporal vector sequences by mapping between identical distributions. This is consistent with the marginal distributions of the individual vectors in a stationary vector process being identical. That is, the probability distribution of an individual vector in the vector process is identical for all time indices i if no knowledge about other vectors is provided. For example, consider the concatenation of all video sequences in a large database of video sequences. Now select an arbitrary time i (not near the beginning or end). The corresponding image will have a prior distribution (distribution before observation) independent of i as we know nothing of its context. In some examples, both video and audio signals can be considered as stationary (the beginning and endpoints of such audio and video sequences are, in general, time dependent and hence not stationary).

The described system is illustrated below with two examples. First, consider the case of vector sequences where all vectors in a particular sequence are identical (repeat the first vector). The learning procedures described above result in the identity map. Second, consider the case where the vectors represent subsequent images of videos of galloping horses sampled at a standard rate. Using a database of examples, the learning procedure will result in an ODE or SDE based mapping from a horse in a certain pose, to a horse in a reasonable subsequent pose.

The above two examples show that in the described system, the velocity field characterizes both the marginal distribution of the individual vectors and the dynamics of the vector process. The dynamics of the vector process describes how the vectors in the vector process change with the time index i. A measure that quantifies the dynamics of a vector process is the conditional distribution of a vector given numerical descriptions (realizations) of the vectors that preceded it in time. The dynamics may not always be determined by a single previous image. Below, the method for the case where a single previous image is sufficient is first described and then extended for the case where more than one image is required.

Basic Probability Flow based Sequence Generation

Consider a stationary vector process $\{x_i\} i \in \mathbb{Z}$. A first order Markov case can be defined where:

$$p(x_i, \ldots, x_i + N) = \prod_{i=1}^{N} p(x_{i+1}|x_i)p(x_i). \qquad (22)$$

The process can then be defined by a probabilistic forward map $p(x_{i+1}|x_i)$. For individual samples, the map can be implemented with an SDE or ODE that is trained based on subsequent data pairs $\{x_{i+1}, x_i\}$ in a database of processes. Any of the methods discussed above can be used, with performance varying between the methods. During inference a forward

map $\hat{\phi}$ can be performed for each subsequent sample. This procedure works well for original vector processes where the Markov assumption is reasonable.

The assumption that the data can be described as first-order Markov is often not reasonable in its basic form. For example, the speed of a car is, in general, not known from a single image. However, many vector processes, including video and audio signals, are accurately modeled as Markov chains of higher order. Accordingly, the high-order Markov chains can be rewritten as first-order Markov chains to allow usage of our formalism. For example, consider a second-order Markov chain $\{y_i\} i \in \mathbb{Z}$. A vector $x_i$ can be written as $x_i = [y_i^T, y_{i-1}^T]^T$ and then model the first-order Markov sequence $\{x_i\} i \in \mathbb{Z}$ as described above. Note that one part of the map is trivial, as it consists of moving the vector $y_i$ from second to first position. This implies that modeling a second order Markov chain results in only a limited increase in complexity over a first-order Markov chain.

This method may result in the generation of sequences that are typical for the distribution of the data in the training database. The method may require a sequence of initial images as initialization. If these images are noise, inference will generally converge to a stationary (and reasonable) video sequence after some time. Below, procedures for controlling the vector sequence using conditioning are described.

In general, probability flow-based sequence generation is steady-state when considering integer time indices (e.g., when considering the sequence of images of the generated video). The generative method generates subsequent images at integer $i$ by repeatedly solving the SDE or ODE on the interval $t \in [0,1]$, which in this context can be seen as the interval $t = [i, i + 1]$. In some cases, the marginal probability distribution at integer times is the same at all integer times. However, the method may not lead to the same marginal image distributions at non-integer times. The described approach leads to the parameters of the ODE or SDE being periodic with time period 1. Particularly for the SDE, non-integer images may be visibly noisier. This is undesirable if a higher time resolution generated sequence is desired. In some cases, the desirable steady-state behavior can be obtained by adding additional terms to the objective function. For example, the Kullback-Leibler divergence between the integer-time images and the non-integer time images can be used for this purpose. It is advantageous in this respect that the gradient of the Kullback-Leibler divergence required for SGD-based learning is simply the difference between the score functions for the integer time and the score function at non-integer time. In some other cases, the desired steady-state behavior can be obtained by forcing the score function to be constant at all times. The score function can be modeled as time-independent from the outset (by not providing time as an input to the corresponding neural network model) or it can be made time-independent by progressively moving the time-dependent score function to its time-average over the duration of the training procedure.

Conditioning the Probability-Flow Based Sequence Generation

Conditioning of the generation of a vector sequence may be used to obtain sequences of a desired class. The conditioning can be based on a text prompt, or on a finite set of topics such as cats and dogs or walking and running.

Cross-Attention Based Methods

An efficient cross-attention based mechanism for conditioning image generation on text prompts can be applied to the described vector-sequence generation method and may be generalized to other conditioning information. In its basic form, the cross-attention method may require a database of vector sequences and corresponding conditioning features. To facilitate a cross-attention based mechanism, the neural networks $v_\theta$ method described above can be formulated using a cross-attention mechanism. The commonly used U-Net based arrangement can be used for this purpose: each layer of the U-Net can include a cross attention mechanism. The conditioning features are projected onto the key and value embeddings of the cross-attention mechanism and the previous layer input forms the query for the cross-attention mechanism. Training uses simultaneously a finite vector sequence and the corresponding conditioning features.

Example conditioning features include Contrastive Language-Image Pretraining (CLIP) tokens computed from text for generating video. Example conditioning features may also include spectral features (e.g., line spectral frequencies, line-prediction coefficients, or mel spectrogram [perceptually motivated nonuniform resolution spectra]) to characterize the spectral shape for generating a sequence of speech/audio spectra, or low-resolution aliased temporal sequences for speech/audio generation. Moreover, conditioning text prompts can be represented as a set of tokens via a method such as CLIP. In general, databases of captioned vector sequences (video sequences) may be rare. An approach to circumvent this problem includes conditioning only on an initial image sequence. A second approach may be to use individual images to obtain captions via a method such as CLIP. These captions can then be assigned to the video sequence.

Classifier Guidance Based Methods

Consider the step from $t$ to $t - 1$ in a standard diffusion-based sampling (synthesis) process (where $t = 0$ corresponds to the clean image). The method replaces the mean $\mu_\theta(x_t)$ of the distribution of $x_{t-1}$ by $\mu_\theta(xt) + s \Sigma \nabla_{xt} \log p_\phi (y|x_t)$, where s is a scale, and $\Sigma$ is a covariance matrix (typically the identity matrix), where $p_\phi$ is a classifier and $y$ is the desired class for $x_0$. The method can be adapted to other flavors of diffusion-based generation, including deterministic methods. In the context of diffusion, a disadvantage of the method is that a suitably trained classifier must be available for each noise level of the generative process.

Interestingly, classifier-guidance is perhaps more natural for a sequence generation method than for diffusion-based image generation. Once a sequence has reached stationary behavior, the sequence is a sample of a "clean" signal. Particularly for the ODE solution of the map from time $i$ to time $i + 1$ can be an evolving image that is clean or nearly clean. Thus, a single classifier suffices. In some cases, this argument can also hold for the SDE case. This scenario is in contrast to diffusion-based generation, where classifiers must be trained for each individual noise level of the diffusion process. Instead, in our sequence generation method the classifier and the generation process can be trained independently. In some cases, the standard correction $\Sigma \nabla_{xt} \log p_\phi (y|x_t)$ can be applied to each step from $x_0$ to $x_1$, with a suitably selected s and $\Sigma$.

Joint Training Based Methods: Classifier-Free Guidance

Perhaps the most straightforward conditioning is to divide the training database into classes with an associated label and then train either separate generative methods or specify the label as input to the generative process. In practice, this is found to be inefficient compared to the so-called classifier-free based method.

Classifier-free based methods assume that the database is labeled (possibly with a trained classifier). The generative system has as additional input a class label, "empty", which corresponds to "no conditioning". A single training process can now be used, which trains simultaneously labeled and unlabeled data. The unlabeled data provide a form of regularization for the training process. This makes it particularly attractive for diffusion based generative systems (as classifier guidance-based methods have drawbacks for such systems). The classifier-free guidance method can be applied to the training methods without any adaptations.

Applications

Vector stochastic processes that can be described as Markov processes are common in numerous areas. Such processes can be modeled with probability flow models. Examples include video signals, block-transform representations of audio signals, weather time series data, and motion capture data. New instantiations of these processes can be generated with the probability flow based generative methods discussed in the previous sections.

Video signals

Video signals are sequences of images, which typically have three colors (three channels). Each image can be seen as a vector in a vector sequence. The sequence of images can be generated using a probability flow model.

Conditioning makes the generated sequence useful for a range of purposes. The conditioning can be based on one or more modalities. Two specific conditioning cases are described below.

Text-Based Generation

Generative systems for video are commonly conditioned on text. Typically, the conditioning is derived from captions on images rather than video. This is natural when the generative system has a separation in temporal and spatial layers. Moreover, conditioned on text is effective as large amounts of captioned images are readily available. In contrast, straightforward methods for conditioning probability flow models on text would require a large database of videos with captions, which makes text-based video generation with probability flow more challenging than for existing approaches.

Hierarchical features

Probability flow-based modeling is natural for the generation of super-resolution (higher resolution) video conditioned on lower-solution videos. Low resolution video can be encoded at low bit rates making the method attractive for coding. In some cases, for coding applications at the encoding side, a down sampling method (either with low-pass filtering, or subject to aliasing) is employed and the low-resolution signal is quantized and encoded with any existing method. At the decoding side, the corresponding quantized low-resolution video sequence is reconstructed. A high-resolution signal conditioned on the low-resolution decoded signal can be generated. This generation approach hierarchically can be applied multiple times to obtain a very high-resolution video. For each super-resolution operation, a separate diffusion based generative system can be trained. For example, the cross-attention based methods described above can be used for the conditioning of the super-resolution operation.

Audio signals

In some cases, the described system can be employed in the modeling of mono (scalar) audio (including speech) signals based on probability flow models. For example, the flow-based generation can be performed in a transform domain representation that describes the audio signal as a vector sequence. In some cases, a sufficiently accurate (possibly exact) inverse transform is defined. A generated transform-domain audio signal can then be transformed back into scalar audio signals with this inverse transform.

An example vector-sequence audio representation that can be generated with probability flow is the short-time Fourier transform (STFT) of the audio signal (a sequence of discrete Fourier transforms of subsequent overlapping signal blocks). Either a sequence of only magnitude spectra or a sequence of complex spectra may be generated. In most cases the transform descriptions are over specified (even in the case of magnitude spectra), which means there are more coefficients in the STFT domain than in the original time domain signal. Existing standard methods for determining a suitable time-domain signal can be used. For example, the Griffin-Lim algorithm combined with windowed overlap-add can be used to create audio signals from sequences of magnitude spectra, Alternatively, neural-network based synthesis methods can be used to generate audio signals from sequences of magnitude spectra. The standard inverse STFT can be used to generate audio sequences from sequences of complex spectra.

Another example of a vector-sequence audio representation that can be generated with the probability-flow-based generative system is the latent-layer representation of an autoencoder, either a standard autoencoder or a variational autoencoder. The latent layer may be a vector sequence with an update rate far below the sampling rate of the original signal. The encoder and decoder may each consist of convolutional neural network (CNN) layers. Probability-flow based generation can be used to generate the vector sequence conditioned on meta information such as text and a parameterized talker description. The decoder of the (variational) autoencoder can then be used to map the probability flow based on generated into an audio signal.

Next, three types of conditioning are described. in more detail. The conditioning can be used for the generation of a spectrogram sequence, an auto encoder latent layer sequence, or the audio signal itself.

Perceptual features

For speech coding, it is common to generate the signal based on slowly updated features that can be described at a low bit rate. A typical example of these features are parameters of a particular description of the short-term magnitude spectrum. These can be, for example, so-called line spectral frequencies, cepstra, mel-frequency amplitudes, linear-prediction coefficients, or reflection coefficients descriptions of prediction filters. This approach can be used for the probability flow model of any of the fore-mentioned vector-sequence representations. To encode a speech signal, the features are extracted from the original signal, quantized and transmitted to the quantization indices. At the decoding end, the features are decoded and used to condition the generation of the vector-sequence audio representation, where needed followed by the transformation back into a scalar audio signal. The cross-attention based methods described above can be used for the conditioning.

Aliased vector signals

A method to obtain a low-rate representation of an audio signal is to down-sample any particular vector-sequence representation of the audio signal. The down-sampling procedure can be refined with a linear or non-linear neural network layer that can be trained or refined together with the generative method. The resulting aliased signal can be used as conditioning for generating a higher rate sampled audio signal representation. The method can be a single-step up-sampling to full rate or hierarchical. This approach can be used with the probability flow model on any of the fore-mentioned vector-sequence representations. Again, the cross-attention based methods described above can be used for such conditioning.

Text

Text can be used as conditioning for a generative system of audio based on a probability flow model. Again, the cross-attention based methods described above can be used for such conditioning.

Motion capture data

The generative method can be used to generate artificial sequences of motion-capture data. The data form a v of vectors made up of or plotting joint angles and locations over time. The generation can be conditional on one or more types of conditioning variables, such as a track of locations and traits of the movement (e.g., violent or smooth). The generated sequences describe the movement of stick figure models that can be used for creating dynamic agents in video games.

Example Environment

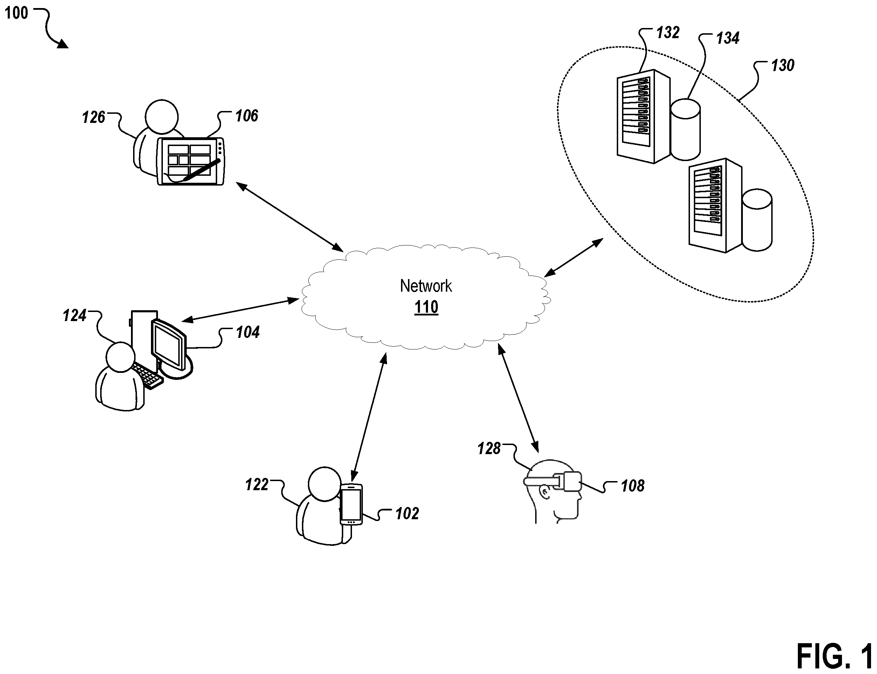

FIG. 1 depicts an example environment 100 that can be employed to execute implementations of the present disclosure. The example environment 100 includes computing devices 102, 104, 106, 108; a back-end system 130, and a communication network 110. The communication network 110 may include wireless and wired portions. In some cases, the communication network 110 is implemented using one or more existing networks, for example, a cellular network, the Internet, a land mobile radio (LMR) network, a BLUETOOTH network, a wireless local area network (for example, Wi-Fi), a wireless accessory Personal Area Network (PAN), a Machine-to-machine (M2M) network, and a telephone network. The communication network 110 may also include future developed networks. In some implementations, the communication network 110 includes the Internet, an intranet, an extranet, or an intranet and/or extranet that is in communication with the Internet. In some implementations, the communication network 110 includes a telecommunication or a data network.

In some implementations, the communication network 110 connects web sites, devices (e.g., the computing devices 102, 104, 106, and 108) and back-end systems (e.g., the back-end system 130). In some implementations, the communication network 110 can be accessed over a wired or a wireless communications link. For example, mobile computing devices (e.g., the computing device 102 can be a smartphone device and the computing device 106 can be a tablet), can use a cellular network to access the communication network 110.

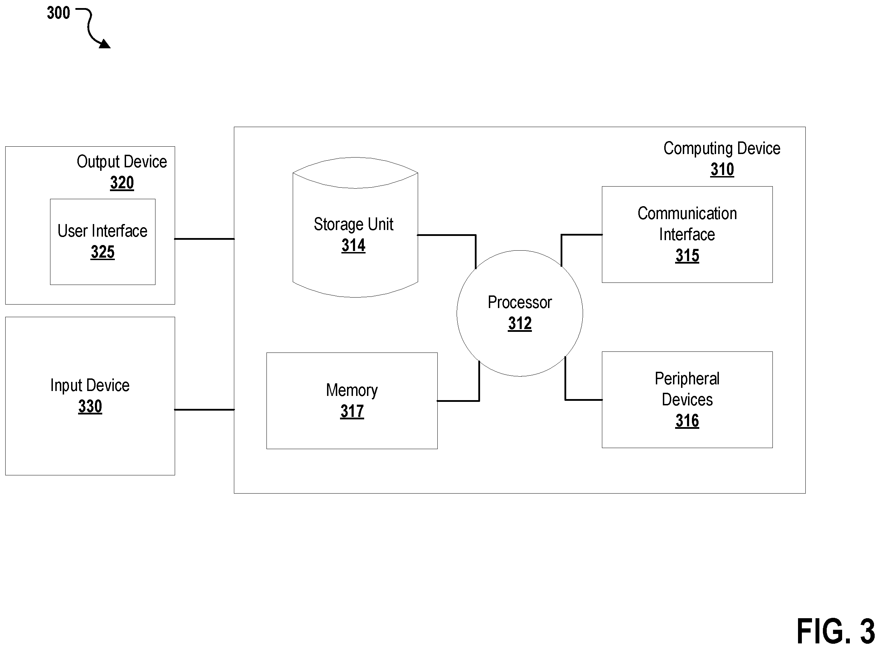

In some implementations, the computing devices 102, 104, 106 and 108 are sustainably similar to the computing device 310 described below with reference to FIG. 3. The computing devices 102, 104, 106, and 108 may include (e.g., may each include) any appropriate type of computing device, such as a desktop computer, a laptop computer, a handheld computer, a tablet computer, a personal digital assistant (PDA), an augmented reality (AR) / virtual reality (VR) device, a cellular telephone, a network appliance, a camera, a smart phone, an enhanced general packet radio service (EGPRS) mobile phone, a media player, a navigation device, an email device, a game console, or an appropriate combination of any two or more of these devices or other data processing devices.

In some examples, the users 122, 124, 126, and 128 interact with the system through a graphical user interface (GUI) (e.g., the user interface 325 described below with reference to FIG. 3) or client application that is installed and executing on their respective computing devices 102, 104, 106, or 108. In some examples, the computing devices 102, 104, 106, and 108 provide viewing data to screens with which the users 122, 124, 126, and 128, can interact (e.g., a user interface where the user may enter a prompt). In some examples, the computing devices 102, 104, 106, and 108 provide one or more vector sequences determined by a generative model and based on a provided prompt.

Four computing devices 102, 104, 106 and 108 are depicted in FIG. 1 for simplicity. In the depicted example environment 100, the computing device 102 is depicted as a smartphone, the computing device 104 is depicted as a tablet-computing device, the computing device 106 is depicted as a desktop computing device, and the computing device 108 is depicted as an XR/AR/VR device. It is contemplated, however, that implementations of the present disclosure can be realized with any of the appropriate computing devices, such as those mentioned previously. Moreover, implementations of the present disclosure can employ any number of devices.

In some implementations, the back-end system 130 includes at least one server device 132 and optionally, at least one data store 134. In some implementations, the server device 132 is sustainably similar to computing device 310 depicted below with reference to FIG. 3. In some implementations, the server device 132 is a server-class hardware type device. In some implementations, the back-end system 130 includes computer systems using clustered computers and components to function as a single pool of seamless resources when accessed through the communication network 110. For example, such implementations may be used in data center, cloud computing, storage area network (SAN), and network attached storage (NAS) applications. In some implementations, the back-end system 130 is deployed using a virtual machine(s).

In some implementations, the data store 134 is a repository for persistently storing and managing collections of data (e.g. training data or image data that includes common elements, which can be employed to build or fill in missing elements of a model representing a real-world space). Example data stores that may be employed within the described system include data repositories, such as a database as well as simpler store types, such as files, emails, and so forth. In some implementations, the data store 134 includes a database. In some implementations, a database is a series of bytes or an organized collection of data that is managed by a database management system (DBMS).

In some implementations, the back-end system 130 hosts one or more computer-implemented services provided by the described system with which users 122, 124, 126, and 128 can interact using the respective computing devices 102, 104, 106, and 108. For example, in some implementations, the back-end system 130 is configured to receive a prompt from the computing devices 102, 104, 106, or 108 and provide one or more vector sequences determined by a generative model and based on the prompt. In some implementations, the computing devices 102, 104, 106, or 108 are configured to execute the generative model and provide the one or more vector sequences directly to the respective user 122, 124, 126, or 126 (e.g., via a GUI) without providing the prompt to the back-end system 130.

Example Process

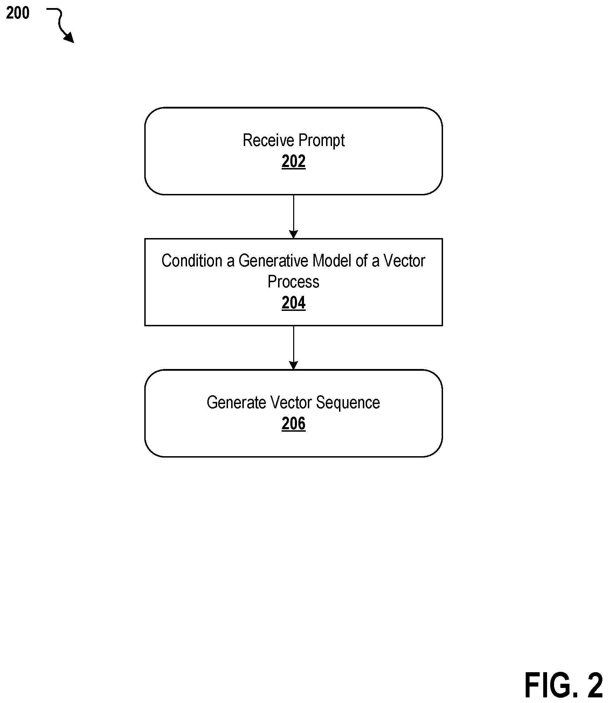

FIG. 2 depicts a flowchart of an example process 200 that can be implemented by implementations of the present disclosure. The example process 200 can be implemented by systems and components described with reference to FIGS. 1 and 3. The example process 200 generally shows in more detail how a generative model for a vector process is used to generate vector sequences based on a prompt.

For clarity of presentation, the description that follows generally describes the example process 200 in the context of FIGS. 1 and 3. However, it will be understood that the process 200 may be performed, for example, by any other suitable system, environment, software, and hardware, or a combination of systems, environments, software, and hardware as appropriate. In some implementations, various operations of the process 200 can be run in parallel, in combination, in loops, or in any order.

At 202, a prompt is received from a computing device (e.g., computing device 310 described below. For example, the computing devices 102, 104, 106, and 108 may provide a prompt entered by the respective user 122, 124, 126, and 128 to the back-end system 130. In other examples, the electronic processor 312 may receive a prompt via the input device 330 (see the description of FIG. 3 below) and then execute steps 204 and 206 of process 200.

From 202, the process 200 proceeds to 204 where a generative model of a vector process is conditioned based on the prompt. The generative model is defined by a plurality of probability distributions of the vector process and employing a definition of a velocity field over a time interval. In some implementations, the generative model is defined according to a probability flow between the plurality of probability distributions. In some implementations, the generative model is defined according to the probability flow between the plurality of probability distributions based on a continuity equation having a plurality of boundary conditions. In some implementations, the probability flow between the plurality of probability distributions characterizes dynamics of the vector sequence.

In some implementations, the generative model employs an ordinary differential equation or a stochastic differential equation to describe the vector sequence. In some implementations, the ordinary differential equation or the stochastic differential equation map a first sample from a first probability distribution of the plurality of probability distributions to a second sample of a second probability distribution of the plurality of probability distributions based on the velocity field. In some implementations, a movement of the first sample to the second sample is determined according to the ordinary differential equation or the stochastic differential equation. In some implementations, the first sample and the second sample are subsequent vectors in the vector sequence.

In some implementations, the velocity field is determined based on a current vector and time. In some implementations, the velocity field is determined by minimizing one or more loss functions, averaged over a set of example pairs of the first sample and the second sample, and averaged over a range of times. In some implementations, the one or more loss functions are minimized based on an evaluation of a time-derivative of a stochastic interpolant for the set of example pairs at a time.

In some implementations, the velocity field is determined by a neural network. In some implementations, the prompt includes text, a set of features, a set of low-resolution representations, a set of aliased representations, a sequence of images, or a sequence of audio signals. In some implementations, the generative model is conditioned based on a cross-attention method. In some implementations, the neural network is trained based on a stochastic interpolant mapping samples of the first probability distribution to samples of the second probability distribution.

In some implementations, the stochastic interpolant models the vector sequence by mapping between samples of identical distributions. In some implementations, the stochastic interpolant is defined to obtain a velocity field that reduces a number of steps to solve the ordinary differential equation or the stochastic differential equation. In some implementations, the number of steps is defined by a numerical solver over an interval.

In some implementations, the generative model is based on obtaining the velocity field by averaging a time derivative of a stochastic interpolant over pairs of random vectors that are subsequent samples from an instantiation of a ground-truth vector process. In some implementations, the stochastic interpolant is a deterministic function smoothed in a set time using a set of parameters. In some implementations, the set of parameters is determined by minimizing a loss function.

From 204, the process 200 proceeds to 206 where a vector sequence is generated with the generative model. The vector sequence is an instantiation of the vector process. In some implementations, the vector sequence includes video signals, block-transform representations of audio signals, weather time series data, or motion capture data. In some implementations, a machine-learning model is trained with the vector sequence. From 206, the process 200 ends or repeats.

Example System

FIG. 3 depicts an example computing system 300 that includes a computer or computing device 310 that can be programmed or otherwise configured to implement systems or methods of the present disclosure. For example, the computing device 310 can be programmed or otherwise configured to implement the process 200. In some cases, the computing device 310 includes an operating system configured to perform executable instructions. The operating system is, for example, software, including programs and data that manages the device's hardware and provides services for execution of applications.

In the depicted implementation, the computing device 310 includes an electronic processor 312 (also "processor" and "computer processor" herein), such as a central processing unit (CPU) or a graphics processing unit (GPU), which is optionally a single core, a multi core processor, or a plurality of processors for parallel processing. The depicted implementation also includes memory 317 (e.g., random-access memory, read-only memory, flash memory), electronic storage unit 314 (e.g., hard disk or flash), communication interface module 315 (e.g., a network adapter or modem) for communicating with one or more other systems, and peripheral devices 316, such as cache, other memory, data storage, microphones, speakers, and the like. In some implementations, the memory 317, storage unit 314, communication interface module 315 and peripheral devices 316 are in communication with the electronic processor 312 through a communication bus (shown as solid lines), such as a motherboard. In some implementations, the bus of the computing device 310 includes multiple buses. The above-described hardware components of the computing device 310 can be used to facilitate, for example, an operating system and operations of one or more applications executed via the operating system. For example, a vector sequence generated with the generative model may be provided via the user interface 325. In some implementations, the computing device 310 includes more or fewer components than those illustrated in FIG. 3 and performs functions other than those described herein.

In some implementations, the memory 317 and storage unit 314 include one or more physical apparatuses used to store data or programs on a temporary or permanent basis. In some implementations, the memory 317 is volatile memory and can use power to maintain stored information. In some implementations, the storage unit 314 is non-volatile memory and retains stored information when the computer is not powered. In further implementations, memory 317 or storage unit 314 is a combination of devices such as those disclosed herein. In some implementations, memory 317 or storage unit 314 is distributed across multiple machines such as a network-based memory or memory in multiple machines performing the operations of the computing device 310.

In some cases, the storage unit 314 is a data storage unit or data store for storing data. In some instances, the storage unit 314 stores files, such as drivers, libraries, and saved programs. In some implementations, the storage unit 314 stores data received by the device (e.g., a generative model for a vector process). In some implementations, the computing device 310 includes one or more additional data storage units that are external, such as located on a remote server that is in communication through a network (e.g., the communication network 110 described above with reference to FIG. 1).

In some implementations, platforms, systems, media, and methods as described herein are implemented by way of machine or computer executable code stored on an electronic storage location (e.g., non-transitory computer readable storage media) of the computing device 310, such as, for example, on the memory 317 or the storage unit 314. In further implementations, a computer readable storage medium is optionally removable from a computer. Non-limiting examples of a computer readable storage medium include compact disc read-only memories (CD-ROMs), digital versatile discs (DVDs), flash memory devices, solid state memory, magnetic disk drives, magnetic tape drives, optical disk drives, cloud computing systems and services, and the like. In some cases, the computer executable code is permanently, substantially permanently, semi-permanently, or non-transitorily encoded on the media.

In some implementations, the electronic processor 312 is configured to execute the code. In some implementations, the machine executable or machine-readable code is provided in the form of software. In some examples, during use, the code is executed by the electronic processor 312. In some cases, the code is retrieved from the storage unit 314 and stored on the memory 317 for ready access by the electronic processor 312. In some situations, the storage unit 314 is precluded, and machine-executable instructions are stored on the memory 317.

In some cases, the electronic processor 312 is a component of a circuit, such as an integrated circuit. One or more other components of the computing device 310 can be optionally included in the circuit. In some cases, the circuit is an application specific integrated circuit (ASIC) or a field programmable gate arrays (FPGAs). In some cases, the operations of the electronic processor 312 can be distributed across multiple machines (where individual machines can have one or more processors) that can be coupled directly or across a network.

In some cases, the computing device 310 is optionally operatively coupled to a communication network, such as the communication network 110 described above with reference to FIG. 1, via the communication interface module 315, which may include digital signal processing circuitry. Communication interface module 315 may provide for communications under various modes or protocols, such as global system for mobile (GSM) voice calls, short message/messaging service (SMS), enhanced messaging service (EMS), or multimedia messaging service (MMS) messaging, code-division multiple access (CDMA), time division multiple access (TDMA), wideband code division multiple access (WCDMA), CDMA2000, or general packet radio service (GPRS), among others. Such communication may occur, for example, through a transceiver. In addition, short-range communication may occur, such as using a BLUETOOTH, WI-FI, or other such transceiver.

In some cases, the computing device 310 includes or is in communication with one or more output devices 320. In some cases, the output device 320 includes a display to send visual information to a user. In some cases, the output device 320 is a touch sensitive display that combines a display with a touch sensitive element that is operable to sense touch inputs as and functions as both the output device 320 and the input device 330. In still further cases, the output device 320 is a combination of devices such as those disclosed herein. In some cases, the output device 320 displays information via a user interface 325, the information generated by the computing device.

In some cases, the computing device 310 includes or is in communication with one or more input devices 330 that are configured to receive information from a user. In some cases, the input device 330 is a keyboard. In some cases, the input device 330 is a keypad (e.g., a telephone-based keypad). In some cases, the input device 330 is a cursor-control device including, by way of non-limiting examples, a mouse, trackball, trackpad, joystick, game controller, or stylus. In some cases, as described above, the input device 330 is a touchscreen or a multi-touchscreen. In other cases, the input device 330 is a microphone to capture voice or other sound input. In other cases, the input device 330 is an imaging device such as a camera. In still further cases, the input device is a combination of devices such as those disclosed herein.

It should also be noted that a plurality of hardware and software-based devices, as well as a plurality of different structural components may be used to implement the described examples. In addition, implementations may include hardware, software, and electronic components or modules that, for purposes of discussion, may be illustrated and described as if most of the components were implemented solely in hardware. In some implementations, the electronic-based aspects of the disclosure may be implemented in software (e.g., stored on non-transitory computer-readable medium) executable by one or more processors, such as electronic processor 312. As such, it should be noted that a plurality of hardware and software-based devices, as well as a plurality of different structural components may be employed to implement various implementations.

It should also be understood that although certain drawings illustrate hardware and software located within particular devices, these depictions are for illustrative purposes only. In some implementations, the illustrated components may be combined or divided into separate software, firmware, or hardware. For example, instead of being located within and performed by a single electronic processor, logic and processing may be distributed among multiple electronic processors. Regardless of how they are combined or divided, hardware and software components may be located on the same computing device or may be distributed among different computing devices connected by one or more networks or other suitable communication links.

Moreover, various implementations of the systems and techniques described herein can be realized in digital electronic circuitry, integrated circuitry, specially designed ASICs (application specific integrated circuits), computer hardware, firmware, software, or combinations thereof. These various implementations can include implementation in one or more computer programs that are executable or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include computer readable or machine instructions for a programmable electronic processor and can be implemented in a high-level procedural or object-oriented programming language, or in assembly/machine language. As used herein, the terms "machine-readable medium" and "computer-readable medium" refers to any computer program product, apparatus or device (e.g., magnetic discs, optical disks, memory, Programmable Logic Devices (PLDs)) used to provide machine instructions or data to a programmable processor, including a machine-readable medium that receives machine instructions as a machine-readable signal. The term "machine-readable signal" refers to any signal used to provide machine instructions or data to a programmable processor.

The functionality of the computer readable instructions may be combined or distributed as desired in various environments. In some implementations, a computer program includes one sequence of instructions. In some implementations, a computer program includes a plurality of sequences of instructions. In some implementations, a computer program is provided from one location. In other implementations, a computer program is provided from a plurality of locations. In various implementations, a computer program includes one or more software modules. In various implementations, a computer program includes, in part or in whole, one or more web applications, one or more mobile applications, one or more standalone applications, one or more web browser plug-ins, extensions, add-ins, or add-ons, or combinations thereof.

Unless otherwise defined, the technical terms used herein have the same meaning as commonly understood by one of ordinary skill in the art to which the present subject matter belongs. As used in this specification and the appended claims, the singular forms "a," "an," and "the" include plural references unless the context clearly dictates otherwise. Any reference to "or" herein is intended to encompass "and/or" unless otherwise stated.

A number of implementations have been described. Nevertheless, it will be understood that various modifications may be made without departing from the spirit and scope of the disclosed implementations. While preferred implementations of the present disclosure have been shown and described herein, it will be obvious to those skilled in the art that such implementations are provided by way of example only. Numerous variations, changes, and substitutions will now occur to those skilled in the art without departing from the described system. It should be understood that various alternatives to the implementations described herein may be employed in practicing the described system.

Moreover, the separation or integration of various system modules and components in the implementations described earlier should not be understood as requiring such separation or integration in all implementations, and it should be understood that the described components and systems can generally be integrated together in a single product or packaged into multiple products. Accordingly, the earlier description of example implementations does not define or constrain this disclosure. Other changes, substitutions, and alterations are also possible without departing from the spirit and scope of this disclosure.

The following paragraphs provide various examples of the embodiments disclosed herein.

Clause 1. A method comprising: receiving a prompt from a computing device; conditioning a generative model of a vector process based on the prompt, the generative model defined by a plurality of probability distributions of the vector process and employing a definition of a velocity field over a time interval; and generating a vector sequence with the generative model, wherein the vector sequence is an instantiation of the vector process.

Clause 2. The method of clause 1, wherein the generative model is defined according to a probability flow between the plurality of probability distributions.

Clause 3. The method of clause 2, wherein the generative model is defined according to the probability flow between the plurality of probability distributions based on a continuity equation having a plurality of boundary conditions.

Clause 4. The method of clause 2, wherein the probability flow between the plurality of probability distributions characterizes dynamics of the vector sequence.

Clause 5. The method of clause 2, wherein the generative model employs an ordinary differential equation or a stochastic differential equation to describe the vector sequence.

Clause 6. The method of clause 5, wherein the ordinary differential equation or the stochastic differential equation map a first sample from a first probability distribution of the plurality of probability distributions to a second sample of a second probability distribution of the plurality of probability distributions based on the velocity field.

Clause 7. The method of clause 6, further comprising: determining a movement of the first sample to the second sample according to the ordinary differential equation or the stochastic differential equation.

Clause 8. The method of clause 6, wherein the first sample and the second sample are subsequent vectors in the vector sequence.

Clause 9. The method of clause 6, further comprising: determining the velocity field based on a current vector and time.

Clause 10. The method of clause 9, further comprising: determining the velocity field by minimizing one or more loss functions, averaged over a set of example pairs of the first sample and the second sample, and averaged over a range of times.

Clause 11. The method of clause 10, further comprising: minimizing the one or more loss functions based on an evaluation of a time-derivative of a stochastic interpolant for the set of example pairs at a time.

Clause 12. The method of clause 9, wherein the velocity field is determined by a neural network.

Clause 13. The method of clause 12, wherein the prompt includes text, a set of features, a set of low-resolution representations, a set of aliased representations, a sequence of images, or a sequence of audio signals.

Clause 14. The method of clause 12, further comprising: conditioning the generative model based on a cross-attention method.

Clause 15. The method of clause 12, further comprising: training the neural network based on a stochastic interpolant mapping samples of the first probability distribution to samples of the second probability distribution.

Clause 16. The method of clause 15, wherein the stochastic interpolant models the vector sequence by mapping between samples of identical distributions.

Clause 17. The method of clause 15, further comprising: defining the stochastic interpolant to obtain a velocity field that reduces a number of steps to solve the ordinary differential equation or the stochastic differential equation.

Clause 18. The method of clause 17, wherein the number of steps is defined by a numerical solver over an interval.

Clause 19. The method of clause 1, wherein the generative model is based on obtaining the velocity field by averaging a time derivative of a stochastic interpolant over pairs of random vectors that are subsequent samples from an instantiation of a ground-truth vector process.

Clause 20. The method of clause 19, wherein the stochastic interpolant is a deterministic function smoothed in a set time using a set of parameters.

Clause 21. The method of clause 20, wherein the set of parameters is determined by minimizing a loss function.
Clause 22. The method of clause 1, wherein the vector sequence includes video signals, block-transform representations of audio signals, weather time series data, or motion capture data.
Clause 23. The method of clause 1, further comprising: training a machine-learning model with the vector sequence.
Clause 24. The method of clause 1, wherein the vector sequence includes motion-capture data, a sequence of speech spectra or audio spectra, or low-resolution aliased temporal sequences for speech generation or audio generation, a temporal sequence of vectors plotting joint angles and locations over time.
Clause 25. The method of clause 1, wherein the vector sequence describes movement of models used for creating dynamic agents.
Clause 26. The method of clause 1, wherein generating the vector sequence with the generative model includes one or more conditioning variables.
Clause 27. The method of clause 26, wherein the conditioning variables comprise a track of locations and/or traits related to movement.
Clause 28. A system comprising: a processor; and a memory storing instructions that, when executed by the processor, cause the system to perform the method of any one of clauses 1 to 27.
Clause 29. A non-transitory computer-readable medium including instructions that, when executed by an electronic processor, cause a computing system to perform the method of any one of clauses 1 to 27.

**Claims**

1. A computer-implemented method comprising:

   receiving a prompt from a computing device;
   conditioning a generative model of a vector process based on the prompt, the generative model defined by a plurality of probability distributions of the vector process and employing a definition of a velocity field over a time interval; and
   generating a vector sequence with the generative model, wherein the vector sequence is an instantiation of the vector process.

2. The method of claim 1, wherein the generative model is defined according to a probability flow between the plurality of probability distributions or
   wherein the generative model is defined according to the probability flow between the plurality of probability distributions based on a continuity equation having a plurality of boundary conditions.

3. The method of claim 2, wherein the probability flow between the plurality of probability distributions characterizes dynamics of the vector sequence.

4. The method of any one of claims 1 to 3, wherein the generative model employs an ordinary differential equation or a stochastic differential equation to describe the vector sequence and, optionally,
   wherein the ordinary differential equation or the stochastic differential equation map a first sample from a first probability distribution of the plurality of probability distributions to a second sample of a second probability distribution of the plurality of probability distributions based on the velocity field.

5. The method of claim 4, further comprising:

   determining a movement of the first sample to the second sample according to the ordinary differential equation or the stochastic differential equation; and/or
   wherein the first sample and the second sample are subsequent vectors in the vector sequence.

6. The method of claim 4 or 5, further comprising:

   determining the velocity field by minimizing one or more loss functions, averaged over a set of example pairs of the first sample and the second sample, and averaged over a range of times; and, optionally,
   minimizing the one or more loss functions based on an evaluation of a time-derivative of a stochastic interpolant for the set of example pairs at a time.

7. The method of any one of the preceding claims, wherein the prompt includes text, a set of features, a set of low-resolution representations, a set of aliased representations, a sequence of images, or a sequence of audio signals.

8. The method of any one of the preceding claims, further comprising:
   conditioning the generative model based on a cross-attention method.

9. The method of any one of the preceding claims, further comprising determining the velocity field based on a current vector and time; and/or
   wherein the velocity field is determined by a neural network.

10. The method of claim 9, when dependent on at least claim 4, further comprising:

    training the neural network based on a stochastic interpolant mapping samples of the first probability distribution to samples of the second probability distribution; and, optionally,
    wherein the stochastic interpolant models the vector sequence by mapping between samples of identical distributions.

11. The method of claim 10, further comprising:

    defining the stochastic interpolant to obtain a velocity field that reduces a number of steps to solve the ordinary differential equation or the stochastic differential equation; and, optionally,
    wherein the number of steps is defined by a numerical solver over an interval.

12. The method of any one of claims 1 to 10, wherein the generative model is based on obtaining the velocity field by averaging a time derivative of a stochastic interpolant over pairs of random vectors that are subsequent samples from an instantiation of a ground-truth vector process; and, optionally,

    wherein the stochastic interpolant is a deterministic function smoothed in a set time using a set of parameters; and, optionally,
    wherein the set of parameters is determined by minimizing a loss function.

13. The method of any one of the preceding, wherein the vector sequence includes video signals, block-transform representations of audio signals, weather time series data, or motion capture data; and/or

    further comprising training a machine-learning model with the vector sequence;
    and/or
    wherein the vector sequence includes motion-capture data, a sequence of speech spectra or audio spectra, or low-resolution aliased temporal sequences for speech generation or audio generation, a temporal sequence of vectors plotting joint angles and locations over time; and/or
    wherein the vector sequence describes movement of models used for creating dynamic agents; and/or
    wherein generating the vector sequence with the generative model includes one or more conditioning variables; and/or
    wherein the conditioning variables comprise a track of locations and/or traits related to movement.

14. A system comprising:
    a processor; and a memory storing instructions that, when executed by the processor, cause the system to perform the method of any one of claims 1 to 13.

15. A non-transitory computer-readable medium including instructions that, when executed by an electronic processor, cause a computing system to perform the method of any one of claims 1 to 13.

FIG. 1

EP 4 636 651 A2

200

```
┌─────────────────────────────┐
│       Receive Prompt        │
│            202              │
└─────────────────────────────┘
               │
               ▼
┌─────────────────────────────┐
│ Condition a Generative Model│
│      of a Vector Process    │
│            204              │
└─────────────────────────────┘
               │
               ▼
┌─────────────────────────────┐
│   Generate Vector Sequence  │
│            206              │
└─────────────────────────────┘
```

# FIG. 2

FIG. 3

EP 4 636 651 A2